# EUROPÄISCHE PATENTSCHRIFT

(11) **EP 2 283 173 B1**
(45) Veröffentlichungstag und Bekanntmachung des Hinweises auf die Patenterteilung: **04.01.2012**
(21) Anmeldenummer: 09749916.4
(22) Anmeldetag: 22.05.2009
(51) Int. Cl.: D01D 5/12, D01D 10/00

(54) **VERFAHREN ZUM ABZIEHEN UND VERSTRECKEN EINES MULTIFILEN FADENS BEIM SCHMELZSPINNEN SOWIE EINE VORRICHTUNG ZUR DURCHFÜHRUNG DES VERFAHRENS**
METHOD FOR TAKING UP AND DRAWING A MULTIFILAMENT DURING MELT-SPINNING, AND APPARATUS FOR CARRYING OUT SAID METHOD
PROCÉDÉ DE TIRAGE ET D'ÉTIRAGE D'UN FIL MULTIFILAMENT LORS DU FILAGE À L'ÉTAT FONDU, ET DISPOSITIF DESTINÉ À LA RÉALISATION DU PROCÉDÉ

(30) Priorität: 23.05.2008 DE 102008024962; 04.06.2008 DE 102008026738; 22.08.2008 DE 102008039378
(43) Veröffentlichungstag der Anmeldung: 16.02.2011
(73) Patentinhaber: Oerlikon Textile GmbH & Co. KG, 42897 Remscheid (DE)
(72) Erfinder: WEIGEND, Helmut, 42477 Radevormwald (DE)
(74) Vertreter: Kahlhöfer, Hermann
(86) Internationale Anmeldenummer: PCT/EP2009/056226
(87) Internationale Veröffentlichungsnummer: WO 2009/141426

(56) Entgegenhaltungen:
- DE-A1- 19 503 561
- DE-A1- 19 958 245
- JP-A- 2007 009 341
- DR.-ING. OLAF MEISTER: "give yarns the right character-draw rolls and Controls from DIENES"[Online] 28. September 2005 (2005-09-28), - 29. September 2005 (2005-09-29) XP002555900 Tehran, Iran Gefunden im Internet: URL:http://www.dienes.net/down/Symposium20 05.pdf> [gefunden am 2009-11-18]

## Beschreibung

Die Erfindung betrifft ein Verfahren zum Abziehen und Verstrecken eines multifilen Fadens beim Schntelzspinnen gemäß dem Oberbegriff des Anspruchs 1 sowie eine Vorrichtung zur Durchführung des Verfahrens gemäß dem Oberbegriff des Anspruchs 8.

Bei der Herstellung von synthetischen Fäden ist es allgemein bekannt, dass nach dem Schmelzspinnen des multifilen Fadens dieser mittels Galetten abgezogen und verstreckt wird. Je nach Grad der Verstreckung wird hierbei zwischen sogenannten POY-Gamen oder FDY-Garnen unterschieden. Die pre-oriented yarn (POY-Garne) besitzen eine vororientierte, noch nicht fertig verstreckte Struktur. Demgegenüber sind die full drawn yam (FDY-Garne) vollständig verstreckt. Um insbesondere derartig hohe Verstreckungen der multiflen Fäden durchführen zu können, ist es üblich, dass die Fäden beim Abziehen auf eine Verstrecktemperatur erwärmt werden, um dann in einer Streckstufe verstreckt zu werden. Die Erwärmung des Fadens erfolgt dabei durch beheizte Führungsmäntel der Galetten, wie beispielsweise aus der DE 199 58 245 A1 bekannt ist.

Bei dem bekannten Verfahren bei der bekannten Vorrichtung wird hierzu der Faden in mehreren Umschlingungen um den Führungsmantel einer Galette und einer beigeordneten Überlaufrolle geführt. Der Führungsmantel der Galette ist beheizt, so dass der Faden bei Kontakt mit dem Führungsmantel erwärmt wird. Die Anzahl der Umschlingungen an dem Führungsmantel sind im Verhältnis zu der Abzugsgeschwindigkeit derart gewählt, dass nach Ablauf des Fadens von dem Führungsmantel eine gewünschte Verstrecktemperatur erreicht ist. Bei dem bekannten Verfahren und bei der bekannten Vorrichtung sind somit in Abhängigkeit von der Abzugsgeschwindigkeit zur Realisierung mehrerer Umschlingungen entsprechend lang auskragende Führungsmäntel erforderlich. Zudem wird an dem Faden durch die mehrfache Umschlingung eine diskontinuierliche Erwärmung erzeugt.

Aus der DE 31 46 054 A1 ist ein Verfahren und eine Vorrichtung zum Abziehen und Verstrecken eines multifilen Fadens bekannt, bei welcher der Faden zum Abziehen mit einfacher Umschlingung an dem Führungsmantel einer Galette geführt wird. Hierbei ist der Führungsmantel jedoch nicht erwärmt, so dass der Faden in der nachfolgenden Zone kalt verstreckt wird. Derartige kalt verstreckte Fäden besitzen jedoch grundsätzlich den Nachteil, dass sehr hohe Streckkräfte erzeugt werden müssen, die insbesondere bei der Herstellung von mehreren parallel geführten Fäden von Nachteil sind.

Im Stand der Technik sind jedoch auch grundsätzlich solche Verfahren bekannt, bei welchen die Erwärmung des Fadens kontaktlos mittels Strahlungsheizer erfolgt. So ist beispielsweise aus der WO 2007/115703 A1 ein Verfahren und eine Vorrichtung zum Abziehen und Verstrecken eines multifilen Fadens beschrieben, bei welchem bzw. welcher der Faden mit einfacher Umschlingung an den Führungsmänteln der Galetten geführt ist. Hierbei sind zwischen den Führungsmänteln Behandlungszonen gebildet, die zum Erwärmen des Fadens durch Strahlungsheizer genutzt werden. Derartige Verfahren und Vorrichtungen erfordern somit größere freie Führungsstrecken des Fadens, um bei hohen Geschwindigkeiten eine ausreichende Temperierung zu ermöglichen.

Es ist nun Aufgabe der Erfindung, ein Verfahren und eine Vorrichtung zum Abziehen und Verstrecken eines multifilen Fadens der gattungsgemäßen Art zu schaffen, das bzw. die auch bei hohen Abzugsgeschwindigkeiten und Streckgeschwindigkeiten des Fadens eine effiziente Erwärmung des Fadens ermöglicht.

Ein weiteres Ziel der Erfindung liegt darin, ein Verfahren und eine Vorrichtung zum Abziehen und Verstrecken eines multifilen Fadens bereitzustellen, mit welchem auch eine Mehrzahl parallel gesponnener Fäden in kompakter Anordnung verstreckbar sind.

Diese Aufgabe wird erfindungsgemäß durch ein Verfahren mit den Merkmalen des Anspruchs 1 sowie durch eine Vorrichtung zur Durchführung des Verfahrens mit den Merkmalen nach Anspruch 8 gelöst.

Vorteilhafte Weiterbildungen der Erfindung sind durch die Merkmale und Merkmalskombinationen der jeweiligen Unteransprüche definiert.

Der Erfindung liegt die Erkenntnis zugrunde, dass beim Erwärmen des multifilen Fadens an einem mit einer hohen Umfangsgeschwindigkeit angetriebenen Führungsmantel einer Galette die Umfangsgeschwindigkeit des Führungsmantels und die Kontaktlänge des Fadens am Umfang des Führungsmantels in einem bestimmten Verhältnis gehalten werden müssen, um die zum Verstrecken des Fadens erforderliche Fadentemperatur zu erhalten und um die zum Abziehen und Verstrecken des Fadens erforderliche Fadenzugkraft erzeugen zu können.

Die Erfindung war auch nicht durch das aus der DE 1435719 bekannte Verfahren und bekannte Vorrichtung nahegelegt. Bei dem bekannten Verfahren werden mehrere parallel geführte synthetische Fäden mit niedrigen Geschwindigkeiten durch einen unbeheizten Führungsmantel einer Galette abgezogen und zu einer frei drehbar gelagerten Heiztrommel geführt. Der Führungsmantel der Heiztrommel ist beheizt, so dass die Fäden erwärmt werden. Zum Verstrecken der Fäden ist der Heiztrommel ein zweiter angetriebener Führungsmantel einer Galette nachgeordnet. Bei dem bekannten Verfahren und der bekannten Vorrichtung stellt sich somit eine von der Fadenreibung abhängige Umfangsgeschwindigkeit an der Heiztrommel ein. Solche Systeme sind für hohe Geschwindigkeiten zum Verstrecken von synthetischen Fäden jedoch völlig ungeeignet, da die Fäden mit hohem Schlupf am Umfang der Heiztrommel geführt würden.

Die Erfindung basiert demgegenüber darauf, dass der Führungsmantel zum Abziehen der Fäden mit einer Umfangsgeschwindigkeit im Bereich oberhalb 1.500 m/min angetrieben wird. Damit wird der Faden unmittelbar durch den von dem Führungsmantel der Galette vorzugsweise direkt aus einer Spinneinrichtung abgezogen. Um trotz der hohen Abzugsgeschwindigkeit eine Erwärmung des Fadens zu ermöglichen, wird der Faden erfindungsgemäß an dem zum Abziehen angetriebenen Führungsmantel mit einer ununterbrochenen Kontaktlänge von mindestens 650 mm geführt, wobei der Führungsmantel auf eine Oberflächentemperatur im Bereich zwischen 80 °C bis 200 °C erwärmt wird. Die erfindungsgemäße Vorrichtung weist hierzu einen angetriebenen Führungsmantel mit einem derart gro-βen Außendurchmesser auf, dass der Faden bei einer einfachen Umschlingung zumindest über einen Teilumfang mit einer ununterbrochenen Kontaktlänge von zumindest 650 mm führbar ist. Bei einer grenzwertigen Umschlingung von max. 360 ° würde demgemäß der Führungsmantel einen Außendurchmesser von 207 mm aufweisen müssen.

Um neben der Erwärmung des Fadens auch eine ausreichende Fadenspannung beim Abziehen des Fadens aufbauen zu können, ist die Verfahrensvariante bevorzugt verwendet, bei welcher der Faden dem Führungsmantel mit einem Umschlingungswinkel von größer 270° umschlingt. Damit lassen sich ausreichende Zugkräfte an dem Faden erzeugen, um die Filamentstränge des Fadens gleichmä-βig nach dem Extrudieren abziehen zu können.

Um nach dem Verstrecken des Fadens eine Nachbehandlung zum Abbau innerer Spannungen in dem Faden zu ermöglichen, ist besonders die Verfahrensvariante geeignet, bei welcher der Faden an dem zum Verstrecken angetriebenen Führungsmantel mit einer ununterbrochenen Kontaktlänge von mindestens 650 mm geführt wird, wobei der Führungsmantel auf eine Oberflächentemperatur im Bereich zwischen 80 °C bis 200 °C erwärmt wird. Somit lässt sich der Faden für eine Relaxationsbehandlung erwärmen.

Um zwischen den beiden Führungsmänteln der Galetten eine vollständige Verstreckung des Fadens zu erhalten, wird der Faden an dem Führungsmantel zum Verstrecken mit zumindest einem Umschlingungswinkel von > 270 ° geführt. Damit lassen sich hohe Streckkräfte auch zum Verstrecken mehrerer an dem Umfang der Führungsmäntel geführten Fäden erzeugen.

Um mit möglichst geringem Energieeinsatz eine Temperierung des Fadens auf eine Verstrecktemperatur zu ermöglichen, besteht die Möglichkeit, dass der Faden in einem trockenen Zustand ohne Benetzung aus einer Spinnzone abgezogen wird und dass der Faden nach dem Verstrecken in einem gespannten Fadenstück präpariert wird. Damit entfällt das sogenannte Auskochen des Präparationsmittels an dem Faden, so dass der Faden bei Kontakt mit den beheizten Führungsmänteln unmittelbar auf die gewünschte Verstrecktemperatur erwärmt werden kann.

Um dabei das durch elektrostatische Aufladung bedingte Aufspreizen der Filamente des Fadens zu vermeiden, wird die Verfahrensvariante bevorzugt verwendet, bei welcher der Faden an den Führungsmänteln der Galetten zum Abziehen und Verstrecken jeweils in einer umlaufenden Führungsnut geführt wird. Damit bleibt das Filamentbündel des Fadens zusammen. Zudem verbessert sich die Wärmeeinbringung in den gesamten Filamentbündel des Fadens, da sich in Abhängigkeit von der Form der Führungsnut eine größere Kontaktfläche zwischen dem Führungsmantel und dem Faden ausbilden lässt.

Um den Zusammenhalt der Filamente des Fadens auch außerhalb der Führungsnut und der Führungsmäntel zu gewährleisten, ist es auch möglich, vor dem Abziehen an dem Faden eine Verwirbelung zu erzeugen. Hierbei lässt sich die Verwirbelung bevorzugt derart einstellen, dass der Faden verdreht wird.

Zur Verbesserung und Vergleichmäßigung der Erwärmung des Fadens auf eine Strecktemperatur ist die Verfahrensvariante besonders vorteilhaft, bei welcher der Faden vor Auflauf auf den Führungsmantel mit Teilumschlingung über zumindest eine Verteilrolle geführt wird. Dadurch lässt sich eine Vorverteilung der einzelnen Filamente in dem Faden erreichen, so dass sich der Faden annähernd bandförmig an den Umfang des Führungsmantels anlegt. Damit können auch Fäden mit einer hohen Anzahl von einzelnen Filamenten gleichmäßig erwärmt werden.

Bei Prozessen, bei welchen Fäden mit großen Fadentitem und mit hohen Geschwindigkeiten abzuziehen und zu verstrecken sind, lässt sich die Verfahrensvariante nutzen, bei welcher der Faden vor und nach dem Verstrecken zusätzlich ohne Kontakt durch Wärmestrahlung beheizt wird. So können beispielsweise Führungsstrecken an den Führungsmänteln oder außerhalb der Führungsmäntel genutzt werden, um eine zusätzliche Wärmeenergie dem Faden zuzuführen.

Die erfindungsgemäße Vorrichtung zur Durchführung des erfindungsgemäßen Verfahrens bietet den besonderen Vorteil, dass einerseits die zum Abziehen des Fadens verwendete Galette bei einfacher Umschlingung des Führungsmantels sowohl die erforderlichen Abzugskräfte als auch die gewünschte Temperierung des Fadens selbst bei hohen Geschwindigkeiten von oberhalb 1.500 m/min ermöglicht.

Um die ausreichenden Kontaktlängen bei einfacher Umschlingung an dem Umfang des Führungsmantels zu realisieren, weist der Führungsmantel bevorzugt einen Außendurchmesser im Bereich > 250 mm auf.

Um eine möglichst kompakte Anordnung zum Abziehen und Verstrecken zu realisieren, wird gemäß einer besonders vorteilhaften Weiterbildung der Vorrichtung der beheizte Führungsmantel zum Verstrecken des Fadens mit einem Außendurchmesser in einer Größe ausgebildet, welche bei Teilumschlingung des Fadens eine ununterbrochene Kontaktlänge von zumindest 650 mm ergibt. Damit sind Temperierungen des Fadens für eine Nachbehandlung insbesondere einer Relaxationsbehandlung möglich.

Um einerseits ein Anlaufen und Ablaufen des Fadens an den beheizten Führungsmänteln zu ermöglichen und andererseits hohe Teilumschlingungen des Fadens an dem Führungsmantel zu realisieren, sind die Weiterbildungen der erfindungsgemäßen Vorrichtung bevorzugt verwendet, bei welchen dem Führungsmantel zum Abziehen auf einer Fadenablaufseite eine angetriebene Umlenkrolle zugeordnet ist, durch welche der Faden zwischen den Führungsmänteln der Galetten geführt ist.

Ebenso ist dem Führungsmantel zum Verstrecken auf einer Fadenablaufseite eine zweite angetriebene Umlenkrolle zugeordnet, so dass an jedem der Führungsmäntel ein hoher Umschlingungsgrad realisierbar ist.

Zur Verbesserung der Erwärmung des Fadens wird bevorzugt die Weiterbildung der erfindungsgemäßen Vorrichtung verwendet, bei welcher zumindest eine Verteilrolle dem Führungsmantel zum Abziehen auf einer Fadenzulaufseite zugeordnet ist. Damit lässt sich eine vorteilhafte bandförmige Vororientierung der einzelnen Filamente innerhalb des Fadens erreichen. Neben einer größeren Kontaktfläche zwischen Faden und Führungsmantel werden zusätzlich wenige Lagen von übereinander liegenden Filamenten in dem Faden erreicht.

Für den Fall, dass der Faden in einem wesentlichen trockenen Zustand aus der Spinneinrichtung abgezogen wird, ist bevorzugt eine Präparationseinrichtung zum Benetzen des Fadens der zweiten Umlenkrolle im Fadenlauf nachgeordnet. Damit lässt sich der Faden unmittelbar nach dem Verstrecken für die weitere Behandlung mit einem Präparationsmittel benetzen.

Die Führung des Fadens wird bevorzugt an den Führungsmänteln durch umlaufende Führungsnuten am Umfang der Führungsmäntel vollzogen.

Die Temperierung des Fadens, insbesondere bei großen Fadentitem und hohen Fadengeschwindigkeiten, lässt sich durch die Weiterbildung der erfindungsgemä-βen Vorrichtung dadurch verbessern, indem zumindest ein zusätzlicher Strahlungsheizer zum Erwärmen des Fadens vorgesehen ist. Der Strahlungsheizer lässt sich sowohl dem Umschlingungsbereich eines der Führungsmäntel oder einer freien Fadenführungsstrecke zuordnen.

Bei dem Abziehen eines trockenen nicht benetzten Fadens wird die erfindungsgemäße Vorrichtung bevorzugt derart verwendet, dass dem Führungsmantel zum Abziehen des Fadens im Fadenlauf eine Verwirbelungsdüse vorgeordnet ist. Die Verwirbelungsdüse lässt sich dabei bevorzugt derart ausbilden, dass an dem Faden ein Drall erzeugbar ist. Damit bleibt der Zusammenhalt des Filamentbündels nach dem Schmelzspinnen und Zusammenfassen der einzelnen Filamentstränge im Wesentlichen auch beim Verstrecken des Fadens erhalten. Jedoch lässt sich durch die Verwirbelung des Fadens auch bei einem präparierten Faden der Auftrag an den einzelnen Filamenten vergleichmäßigen.

Das erfindungsgemäße Verfahren sowie die erfindungsgemäße Vorrichtung zur Durchführung des Verfahrens sind nachfolgend anhand eines Ausführungsbeispiels unter Bezug auf die beigefügten Figuren näher erläutert.

Es stellen dar:
Figur 1 schematisch eine Seitenansicht eines ersten Ausführungsbeispiels der erfindungsgemäßen Vorrichtung zur Durchführung des erfindungsgemäßen Verfahrens.
Figur 2 schematisch eine Draufsicht des Ausführungsbeispiels nach Figur 1.
Figur 3 schematisch eine Seitenansicht eines weiteren Ausführungsbeispiels der erfindungsgemäßen Vorrichtung innerhalb einer Spinnanlage.
Figur 4 schematisch eine Vorderansicht des Ausführungsbeispiels nach Figur 3.
Figur 5 schematisch eine Querschnittsansicht eines Ausführungsbeispiels einer Galette zum Abziehen oder zum Verstrecken eines Fadens.

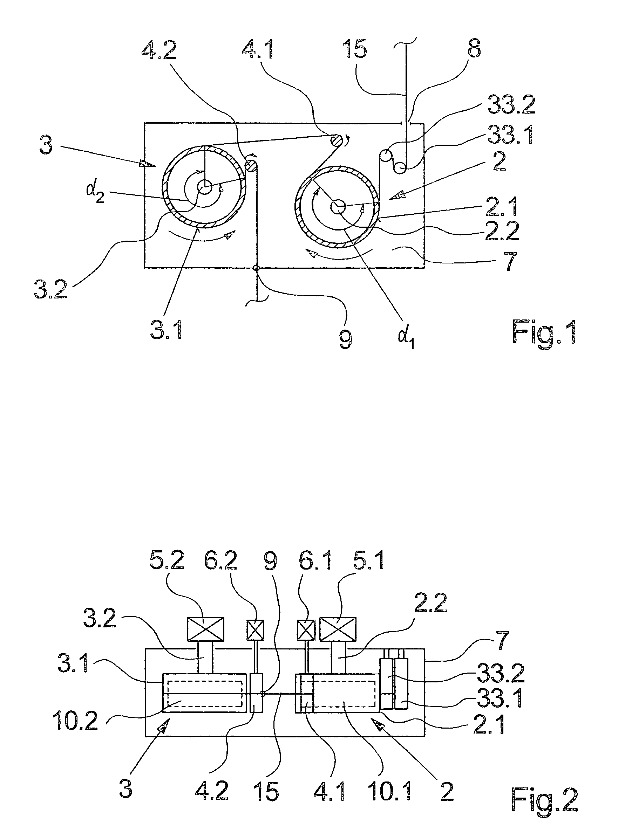

In der Figur 1 und Figur 2 ist ein erstes Ausführungsbeispiel der erfindungsgemä-βen Vorrichtung zur Durchführung des erfindungsgemäßen Verfahrens gezeigt. In Figur 1 ist das Ausführungsbeispiel schematisch in einer Seitenansicht und in Figur 2 schematisch in einer Draufsicht dargestellt. Soweit kein ausdrücklicher Bezug zu einer der Figuren gemacht ist, gilt die nachfolgende Beschreibung für beide Figuren.

Zum Abziehen eines Fadens 15 aus einer hier nicht dargestellten Spinneinrichtung weist das Ausführungsbeispiel eine Abzugsgalette 2 auf. Die Abzugsgalette 2 besteht aus einem hohlzylindrischen Führungsmantel 2.1 und einer mit dem Führungsmantel 2.1 drehfest verbundenen Antriebswelle 2.2. Die Antriebswelle 2.2 ist mit einem Galettenantrieb 5.1 gekoppelt. Innerhalb des Führungsmantels 2.1 der Abzugsgalette 2 ist ein Heizmittel 10.1 vorgesehen, durch welches der Führungsmantel 2.1 beheizbar ist.

Der Außendurchmesser des Führungsmantels 2.1 der Abzugsgalette 2 ist in seiner Größe derart gewählt, dass der Faden 15 bei einer Teilumschlingung mit einer Kontaktlänge von mindestens 650 mm ohne Unterbrechung am Umfang des Führungsmantels 2.1 geführt werden kann. Hierzu wird der Führungsmantel 2.1 im Führungsbereich des Fadens 15 mit einem Außendurchmesser von oberhalb 240 mm ausgeführt.

Um einen möglichst hohen Umschlingungsgrad an dem Führungsmantel 2.1 der Abzugsgalette 2 zwischen einem Fadenauflauf und einem Fadenablauf zu erhalten, ist dem Führungsmantel 2.1 im Fadenablaufbereich eine Umlenkrolle 4.1 zugeordnet. Die Lage der Umlenkrolle 4.1 ist in Relation zu einem Fadenauflauf derart gewählt, dass sich ein Umschlingungswinkel bei Teilumschlingung des Fadens 15 am Umfang des Führungsmantels 2.1 von > 270 ° ergibt. In Figur 1 ist der Umschlingungswinkel des Fadens 15 am Umfang des Führungsmantels 2.1 der Abzugsgalette 2 mit dem Winkel α₁ eingetragen.

Die Umlenkrolle 4.1 ist mit einem Rollenantrieb 6.1 gekoppelt und vorzugsweise mit gleich großer Umfangsgeschwindigkeit angetrieben wie der Führungsmantel 2.1 der Abzugsgalette 2, so dass keine Relativ-Geschwindigkeiten zwischen der Umlenkrolle 4.1 und dem Führungsmantel 2.1 der Abzugsgalette 2 wirksam werden. Zudem kann die Umlenkrolle 4.1 beheizbar ausgebildet sein, um möglichst Temperaturunterschiede an dem Faden zu vermeiden und um über die Umlenkrolle einen definierten Streckpunkt an dem Faden zu erzeugen.

In einem Fadenzulaufbereich ist der Abzugsgalette 2 eine Verteilrolle 33.1 zugeordnet, durch welche der Faden vor Auflauf auf den Führungsmantel 2.1 mit Teilumschlingung geführt wird. In diesem Ausführungsbeispiel sind zwei Verteilrollen 33.1 und 33.2 vorgesehen, die S- oder Z- förmig von dem Faden umschlungen sind, bevor der Faden von der Abzugsgalette 2 aufgenommen wird. Damit ergibt sich eine bandförmige Orientierung der Filamente innerhalb des Fadens, was den Wärmeübergang auf die einzelnen Filamente erleichtert. Die Verteilrollen sind vorzugsweise frei drehbar gelagert ausgebildet. Grundsätzlich besteht jedoch auch die Möglichkeit eine oder beide Verteilrollen anzutreiben, um z.B. Bremseffekte an dem Faden zu erhöhen.

Seitlich neben der Abzugsgalette 2 ist eine Streckgalette 3 angeordnet, die durch einen Führungsmantel 3.1 und eine mit dem Führungsmantel 3.1 fest verbundene Antriebswelle 3.2 gebildet ist. Die Antriebswelle 3.2 ist mit einem Galettenantrieb 5.2 verbunden. Der Führungsmantel 3.1 der Streckgalette 3 ist ebenfalls hohlzylindrisch ausgebildet. Innerhalb des Führungsmantels 3.1 ist ein zweites Heizmittel 10.2 vorgesehen, um den Führungsmantel 3.1 der Streckgalette 3 zu beheizen.

Dem Umfang des Führungsmantels 3.1 ist mit kurzem Abstand eine zweite Umlenkrolle 4.2 zugeordnet, wobei ein an dem Führungsmantel 3.1 ausgebildeter Fadenauflauf und die in einem Fadenablauf positionierte Umlenkrolle 4.2 eine Teilumschlingung mit einem Winkel α₂ an dem Führungsmantel 3.1 bewirken. Die Größe des Außendurchmessers des Führungsmantels 3.1 ist hierbei ebenfalls derart gewählt, dass die durch den Umschlingungswinkel α₂ definierte Kontaktlänge zwischen dem Faden 15 und dem Führungsmantel 3.1 ein Mindestmaß von 650 mm aufweist. In diesem Ausführungsbeispiel sind die Führungsmäntel Soweit sind die Führungsmäntel 2.1 und 3.1 in ihrer Größe identisch ausgebildet.

Die Umlenkrolle 4.2 ist mit einem Rollenantrieb 6.2 verbunden. Die Umlenkrolle 4.2 lässt sich im Vergleich zur Streckgalette mit gleich großer Umfangsgeschwindigkeit zu dem Führungsmantel 3.1 oder mit einer geringeren Differenzgeschwindigkeit antreiben.

Die beheizten Führungsmäntel 2.1 und 3.1 der Abzugsgalette und der Streckgalette sind innerhalb einer Galettenbox 7 angeordnet. Die Galettenbox 7 weist an einer Oberseite einen Fadeneinlass 8 auf, durch welchen der Faden 15 über die Abzugsgalette 2 eingezogen wird. An der Unterseite ist in der Galettenbox 7 ein Fadenauslass 9 ausgebildet, durch welchen der Faden 15 nach dem Abziehen und Verstrecken abgezogen wird.

Im Betrieb wird das in Figur 1 und 2 dargestellte Ausführungsbeispiel zur vollständigen Verstreckung eines multifilen Fadens verwendet, der zuvor durch eine Spinneinrichtung aus einer Mehrzahl von Filamenten extrudiert und abgekühlt wurde. Der Führungsmantel 2.1 der Abzugsgalette 2 wird durch den Galettenantrieb 5.1 mit einer ersten Umfangsgeschwindigkeit angetrieben, die oberhalb 1.500 m/min liegt. So lässt sich ein aus Polyester extrudierter Faden 15 beispielsweise mit einer Abzugsgeschwindigkeit von 2.000 m/min aus einer Spinneinrichtung abziehen. Um den Faden nach dem Abziehen vollständig zu verstrecken, wird der Faden an dem Führungsmantel 2.1 der Abzugsgalette 2 erwärmt. Die Erwärmung des Fadens 15 erfolgt vorzugsweise auf eine Verstrecktemperatur, die oberhalb der Glasumwandlungstemperatur des Fadenmaterials liegt. So würde beispielsweise bei einem Polyesterfaden dieser auf eine Temperatur von oberhalb 85 °C erwärmt. Der Führungsmantel 2.1 der Abzugsgalette 2 wird hierzu durch das Heizmittel 10.1 auf eine Oberflächentemperatur im Bereich von 80 °C bis 200 °C erwärmt. Je nach Polymertyp, Anzahl der Filamente des Fadens, des Fadentiters und der Oberflächentemperatur des Fadens wird zumindest eine Kontaktlänge im Bereich von mindestens 650 mm eingestellt. Der Führungsmantel 2.1 weist hierzu einen Außendurchmesser mit einer Größe von oberhalb 240 mm beispielsweise von 300 mm auf.

Zum Verstrecken des Fadens innerhalb der Fadenstrecke zwischen der Umlenkrolle 4.1 und der Streckgalette 3 wird der Führungsmantel 3.1 mit einer zweiten Umfangsgeschwindigkeit angetrieben, die mindestens das Zweifache der ersten Umfangsgeschwindigkeit des Führungsmantels 2.1 der Abzugsgalette aufweist. So werden zum vollständigen Verstrecken eines Polyesterfadens beispielsweise Umfangsgeschwindigkeiten an der Streckgalette im Bereich von 4.000 bis 5.000 m/min eingestellt.

Um in dem Faden nach dem Verstrecken einen Spannungsabbau durchführen zu können, ist der Führungsmantel 3.1 durch das Heizmittel 10.2 auf eine Oberflächentemperatur im Bereich von 80 °C bis 200 °C erwärmt. Somit können innere Spannungen in dem Faden abgebaut werden. Die der Streckgalette 3 im Fadenlauf nachgeordnete Umlenkrolle 4.2 wird hierbei vorzugsweise mit einer etwas geringeren Umfangsgeschwindigkeit angetrieben als der Führungsmantel 3.1. Anschließend wird der verstreckte Faden 15 über den Fadenauslass 9 abgezogen.

Das in Figur 1 und 2 dargestellte Ausführungsbeispiel zeichnet sich besonders dadurch aus, dass der Faden 15 mit einfachen Umschlingungen an den Führungsmänteln 2.1 und 3.1 der Galetten 2 und 3 sowie an den Umlenkrollen 4.1 und 4.2 geführt wird. Somit sind nur sehr kurze Führungsmäntel 2.1 und 3.1 erforderlich, so dass eine sehr kompakte und energiesparende Bauart möglich ist. Die erfindungsgemäße Vorrichtung ist somit besonders geeignet, um eine Fadenschar aus einer Spinneinrichtung abzuziehen und gemeinsam zu verstrecken.

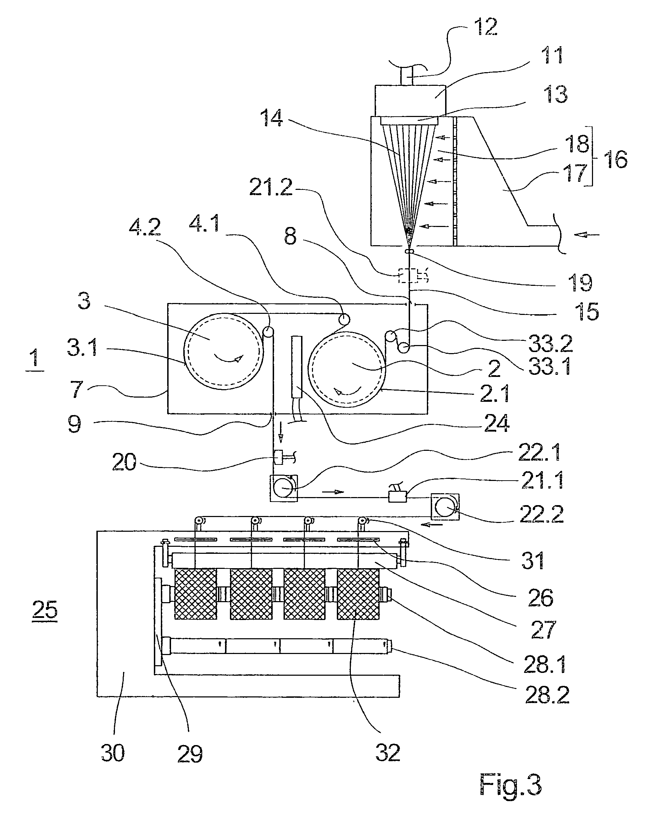

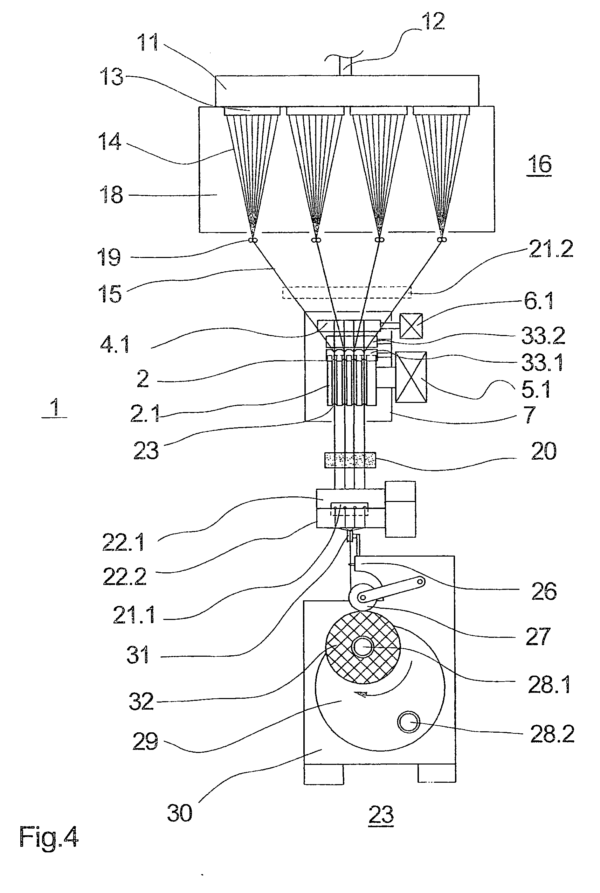

In Figur 3 und Figur 4 ist hierzu ein weiteres Ausführungsbeispiel einer erfindungsgemäßen Vorrichtung zur Durchführung des erfindungsgemäßen Verfahrens innerhalb einer Spinnanlage gezeigt. In Figur 3 ist das Ausführungsbeispiel in einer Seitenansicht und in Figur 4 in einer Vorderansicht dargestellt. Insoweit kein ausdrücklicher Bezug zu einer der Figuren gemacht ist, gilt die nachfolgende Beschreibung für beide Figuren.

Zum Schmelzspinnen mehrerer multifiler Fäden 15 ist ein beheizbarer Spinnbalken 11 vorgesehen, der an seiner Unterseite mehrere Spinndüsen 13 trägt. Jede der Spinndüsen 13 weist an ihrer Unterseite eine Vielzahl von Düsenöffnungen auf, durch welche eine Polymerschmelze zu Filamenten extrudiert wird. Die Spinndüsen 13 sind mit einem Schmelzezulauf 12 verbunden. Der Schmelzezulauf 12 ist mit einer hier nicht dargestellten Schmelzequelle beispielsweise einem Extruder gekoppelt. Innerhalb des Spinnbalkens 11 können weitere Schmelze führende und Schmelze fördernde Bauteile angeordnet sein, auf die an dieser Stelle nicht näher eingegangen wird.

Der Spinnbalken 11 trägt insgesamt vier Spinndüsen 13, um gleichzeitig vier Fäden 15 parallel nebeneinander zu Spinnen.

Unterhalb des Spinnbalkens 11 ist eine Abkühleinrichtung 16 vorgesehen, die aus einem Kühlschacht 18 und einer Anblasvorrichtung 17 gebildet ist. Der Kühlschacht 18 ist derart unterhalb der Spinndüsen 13 angeordnet, dass die Vielzahl der durch die Spinndüsen 13 extrudierten Filamente den Kühlschacht 18 durchlaufen. Über die Anblasvorrichtung 17 lässt sich ein Kühlluftstrom erzeugen, der in den Kühlschacht 18 eingeleitet wird, so dass die durch die Spinndüsen 13 extrudierten Filamente 14 gleichmäßig abgekühlt werden.

Unterhalb des Kühlschachtes 18 ist ein Sammelfadenführer 19 vorgesehen, um die Filamente 14 zu einem Faden 15 zusammenzuführen. Der Sammelfadenführer 19 ist hierzu mittig unterhalb der Spinndüsen 13 angeordnet, so dass die Filamente 14 in dem Sammelfadenführer 19 gleichmäßig zusammengeführt werden.

Um die Fäden 15 gemeinsam aus der Spinnzone abzuziehen und anschließend zu verstrecken, ist unterhalb des Sammelfadenführers 19 eine Verstreckvorrichtung 1 angeordnet. Die Verstreckvorrichtung 1 stellt in diesem Fall die erfindungsgemä-βe Vorrichtung dar, die im Wesentlichen identisch zu dem Ausführungsbeispiel nach Figur 1 und 2 ausgebildet ist. Insoweit wird zu der vorgenannten Beschreibung Bezug genommen und an dieser Stelle nur die Unterschiede erläutert.

Innerhalb der Galettenbox 7 ist zwischen dem Führungsmantel 2.1 der Abzugsgalette 2 und dem Führungsmantel 3.1 der Streckgalette 3 ein zusätzlicher Strahlungsheizer 24 angeordnet. Der Strahlungsheizer 24 ist dem Führungsmantel 2.1 der Abzugsgalette 2 zugewandt, so dass die Fäden 15 am Umfang des Führungsmantels 2.1 eine zusätzliche Erwärmung erhalten. Damit können auch Fäden mit einer besonders großen Anzahl von Filamenten vorteilhaft gleichmäßig auf eine Temperatur oberhalb der Glasumwandlungstemperatur des Fadenmaterials erwärmt werden.

An dieser Stelle sei ausdrücklich erwähnt, dass noch weitere zusätzliche Strahlungsheizer der Verstreckvorrichtung 1 zugeordnet sein könnten. So könnte der Faden 15 in dem Fadenstück zwischen der Umlenkrolle 4.1 und der Streckgalette 3 durch einen zweiten Strahlungsheizer erwärmt werden. Eine derartige Erwärmung des versteckten Fadens dient insbesondere einer Nachbehandlung. Weitere Strahlungsheizer könnten der Abzugsgalette 2 und/oder der Steckgalette 3 zugeordnet sein, um eine intensive Erwärmung der Fäden am Umfang der Führungsmäntel 2.1 und 3.1 auszuführen.

Unterhalb der Verstreckeinrichtung 1 ist in einer Fadenlaufzone zwischen der Verstreckeinrichtung 1 und einer nachfolgenden Aufwickeleinrichtung 25 eine Präparationseinrichtung 20 angeordnet. Die Präparationseinrichtung 20 ist hierbei unmittelbar auf der Abtaufseite der Verstreckeinrichtung 1 gehalten, wobei das der Präparationseinrichtung 20 zugeordnete Fadenstück des Fadens 15 zwischen der Umlenkrolle 4.2 und einer nachgeordneten Führungsgalette 22.1 gespannt ist. Die Führungsgalette 22.1 ist mit einem Antrieb gekoppelt, so dass zwischen der Umlenkrolle 4.2 und der Führungsgalette 22.1 eine Geschwindigkeitsdifferenz einstellbar ist.

Oberhalb der Aufwickeleinrichtung 25 ist eine weitere Führungsgalette 22.2 vorgesehen, die an einer Stirnseite der Aufwickeleinrichtung 25 gehalten ist. Die zweite Führungsgalette 22.2 ist ebenfalls mit einem Antrieb gekoppelt. Zwischen den Führungsgaletten 22.1 und 22.2 ist in dem gespannten Fadenstück eine Verwirbelungseinrichtung 21.1 angeordnet, um in den Fäden 15 einen Fadenschluss durch Bildung von Verflechtungsknoten zu erzeugen. Hierbei lässt sich die Fadenspannung zum Verwirbeln der Fäden 15 vorteilhaft durch eine zwischen den Führungsgaletten 22.1 und 22.2 eingestellte Differenzgeschwindigkeit bestimmen.

Die Aufwickeleinrichtung 25 wird in diesem Ausführungsbeispiel durch eine sogenannte Spulrevolvermaschine gebildet, welche einen drehbaren Spindelträger 29 mit zwei frei auskragenden Spulspindeln 28.1 und 28.2 aufweist. Der Spindelträger 29 ist in einem Maschinengestell 30 gelagert. Dabei lassen sich die Spulspindeln 28.1 und 28.2 abwechselnd in einen Betriebsbereich zum Wickeln einer Spule und in einen Wechselbereich zum Auswechseln der Spulen führen. In dem Maschinengestell ist eine Changiervorrichtung 26 und eine Andrückwalze 27 vorgesehen, um die Fäden 15 zu jeweils einer Spule 32 zu wickeln. Oberhalb der Changiereinrichtung ist jeder Wickelstelle ein Kopffadenführer 31 zugeordnet, durch welche der Einlauf der Fäden 15 durch die Wickelstellen geführt ist. In diesem Ausführungsbeispiel sind die Kopffadenführer 31 durch frei drehbare Umlenkrollen gebildet, um den von der Führungsgalette 22.2 ablaufenden Fäden aus einer im Wesentlichen horizontalen Verteilebene heraus zu den Wickelstellen umzulenken.

Zur Herstellung eines sogenannten FDY-Games wird bei der in Figur 1 und 2 dargestellten Spinnanlage eine Polymerschmelze beispielsweise aus einem Polyester oder einem Polyamid dem Spinnbalken 11 zugeführt. Innerhalb der Spinndüsen 13 wird die Polymerschmelze unter Druck durch die an der Unterseite der Spinndüsen 13 ausgebildeten Düsenbohrungen gedrückt, um eine Vielzahl von Filamenten zu extrudieren. Innerhalb des Kühlschachtes 8 werden die Filamente auf eine Temperatur unterhalb der Glasumwandlungstemperatur des thermoplastischen Materials abgekühlt, so dass eine Verfestigung und eine Vororientierung an den Filamenten eintritt. Nach der Abkühlung der Filamente werden diese zu einem Bündel zusammengeführt und ohne jegliche Benetzung direkt aus der Spinneinrichtung abgezogen. Die Fäden 15 werden nach dem Zusammenfassen im trockenen Zustand mit einer Abzugsgeschwindigkeit von oberhalb 1.500 m/min abgezogen und zwischen der Abzugsgalette 2 und der Streckgalette 3 verstreckt. Der Führungsmantel 2.1 der Abzugsgalette 2 weist hierzu eine Oberflächentemperatur im Bereich von 80 bis 200 °C auf. Um eine vollständige Verstreckung der Fäden 15 und damit eine Orientierung der Molekularstruktur des Fadenmaterials in den Filamenten des Fadens 15 zu erhalten, werden die Fäden mit einer Streckgeschwindigkeit von oberhalb 4.000 m/min verstreckt. Hierzu ist der Führungsmantel 3.1 der Streckgalette 3 mit einer Umfangsgeschwindigkeit von oberhalb 4.000 m/min angetrieben. An dem Führungsmantel 3.1 wird zudem gleichzeitig eine Nachbehandlung in Form einer Relaxation an den Filamenten der Fäden 15 ausgeführt.

Nachdem die Fäden 15 vollständig verstreckt sind, erfolgt eine Präparierung, um einen Fadenschluss der Filamente innerhalb der Fäden 15 zu erhalten.

Vor dem Aufwickeln der voll verstreckten Fäden 15 wird der Fadenschluss durch eine Verwirbelungseinrichtung 21.1 fixiert, indem eine Vielzahl von Verflechtungsknoten in den Fäden 15 erzeugt werden.

Das dabei angewendete erfindungsgemäße Verfahren und die erfindungsgemäße Vorrichtung zum Abziehen und Verstrecken der Fäden zeichnen sich insbesondere durch einen geringen Energieeinsatz auf, um die Verstreckung mehrer Fäden durchzuführen. So lässt sich das trockene Filamentbündel der Fäden in kürzerer Zeit und mit weniger Energie auf eine Strecktemperatur aufheizen, selbst bei den üblich hohen Produktionsgeschwindigkeiten bis zu 6.000 m/min und darüber.

Da bei der trockenen Führung eines Fadens die durch Reibung an Oberflächen erzeugten elektrostatischen Aufladungen ein Aufblähen des Filamentbündels des Fadens verursachen könnten, lässt sich das erfindungsgemäße Verfahren und die erfindungsgemäße Vorrichtung derart erweitern, dass der Abzugsgalette 2 im Fadenlauf eine Verwirbelungseinrichtung vorgeordnet ist. So ist in den Figuren 3 und 4 eine Verwirbelungseinrichtung 21.2 im Bereich zwischen den Sammelfadenführern 19 und der Verstreckeinrichtung 1 dargestellt. Durch die Verwirbelungseinrichtung 21.2 werden jedoch keine Verflechtungsknoten erzeugt, sondern lediglich eine Verwirbelung der Filamente der Fäden 15, um das Aufspreizen aufgrund der elektrischen Ladungen zu vermeiden. Hierbei lassen sich auch vorzugsweise Drallerscheinungen an dem Faden erzeugen. Wesentlich hierbei ist, dass der durch die Verwirbelung an den Fäden erzeugte Zusammenhalt der Filamente sich beim Verstrecken löst und somit eine gleichmäßige Verstreckung aller Filamente erreicht wird.

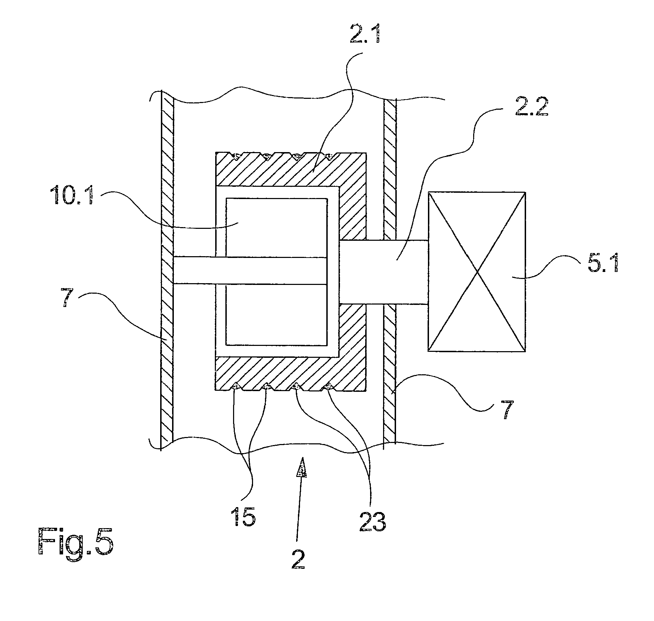

Um insbesondere die Führung von trockenen Fäden zu erleichtern, lässt sich der Führungsmantel 2.1 der Abzugsgalette und der Führungsmantel 3.1 der Streckgalette vorzugsweise mit jeweils einer Führungsnut 23 pro Faden ausbilden. In Figur 5 ist hierzu eine Querschnittsansicht einer Galette gezeigt, die sowohl als Abzugsgalette 2 oder auch als Streckgalette 3 dienen könnte. Das Ausführungsbeispiel nach Fig.5 wird nachfolgend anhand der Abzugsgalette 2 erläutert.

Die Abzugsgalette 2 weist den Führungsmantel 2.1 auf, der drehfest mit der Antriebswelle 2.2 verbunden ist. Die Antriebswelle 2.2 ragt an dem Antriebsende außerhalb der Galettenbox 7 und ist mit dem Galettenantrieb 5.1 verbunden. Am Umfang des Führungsmantels 2.1 sind mehrere umlaufende Führungsnuten 23 vorgesehen, in welchen jeweils einer der Fäden 15 geführt ist. Insgesamt sind vier parallel umlaufende Führungsnuten 23 am Umfang der Führungsmantels 2.1 ausgebildet

Innerhalb des Führungsmantels 2.1 ist ein stationäres Heizmittel 10.1 gehalten, das beispielsweise an einer Tür der Galettenbox 7 befestigt ist und bei verschlossener Galettenbox 7 in den Freiraum des Führungsmantels 2.1 eintaucht. So könnte das Heizmittel 10.1 beispielsweise durch einen Strahlungsheizer gebildet sein, der unmittelbar auf die Innenwandung des Führungsmantels 2.1 einwirkt.

Das in Figur 5 dargestellte Ausführungsbeispiel einer Abzugsgalette 2 lässt sich sowohl in dem Ausführungsbeispiel nach Figur 1 und 2 oder in dem Ausführungsbeispiel nach Figur 3 und 4 einsetzen, um einen oder mehrere Fäden führen zu können. Die Anzahl der Führungsnuten 23 am Umfang des Führungsmantels 2.1 richtet sich dabei nach der Anzahl der Fäden.

Die in den Figuren 1 bis 5 gezeigten Ausführungsbeispiele der erfindungsgemä-βen Vorrichtung zur Durchführung des erfindungsgemäßen Verfahrens sind im Aufbau und Anordnung der einzelnen Behandlungseinrichtungen beispielhaft. So besteht auch die Möglichkeit, die Fäden bei Zusammenfassen der Filamente zu benetzen. So könnte dem Sammelfadenführer die Präparationseinrichtung oder eine zusätzliche Benetzungseinheit zugeordnet sein.
Ebenso lassen sich weitere -hier nicht gezeigte- Heizmittel wie z. B. Konvektionsheizer oder zusätzliche Strahlungsheizer einsetzen, um die Fäden zum Verstrecken und/oder zum Nachbehandeln zu erwärmen.

### Bezugszeichenliste

- 1: Verstreckvorrichtung
- 2: Abzugsgalette
- 2.1: Führungsmantel
- 2.2: Antriebswelle
- 3: Streckgalette
- 3.1: Führungsmantel
- 3.2: Antriebswelle
- 4.1, 4.2: Umlenkrolle
- 5.1,5.2: Galettenantrieb
- 6.1, 6.2: Rollenantrieb
- 7: Galettenbox
- 8: Fadeneinlass
- 9: Fadenauslass
- 10.1, 10.2: Heizmittel
- 11: Spinnbalken
- 12: Schmelzezulauf
- 13: Spinndüse
- 14: Filamentbündel
- 15: Faden
- 16: Abkühleinrichtung
- 17: Anblasvorrichtung
- 18: Kühlschacht
- 19: Sammelfadenführer
- 20: Präparationseinrichtung
- 21.1,21.2: Verwirbelungseinrichtung
- 22.1, 22.2: Führungsgalette
- 23: Führungsnut
- 24: Strahlungsheizer
- 25: Aufwickeleinrichtung
- 26: Changiereinrichtung
- 27: Andrückwalze
- 28.1, 28.2: Spulspindel
- 29: Spindelträger
- 30: Maschinengestell
- 31: Kopffadenführer
- 32: Spule
- 33.1, 33.2: Verteilrolle

## Patentansprüche

1. Verfahren zum Abziehen und Verstrecken eines multifilen Fadens beim Schmelzspinnen, bei welchem der Faden mit zumindest einer Teilumschlingung an angetriebenen Führungsmänteln mehrerer Galetten geführt ist, bei welchem mehrere der Führungsmäntel der Galetten beheizt werden, bei welchem einer der Führungsmäntel zum Abziehen des Fadens mit einer ersten Umfangsgeschwindigkeit im Bereich oberhalb 1.500 m/min angetrieben wird und bei welchem zumindest ein nachgeordneter Führungsmantel zum Verstrecken des Fadens mit einer höheren zweiten Umfangsgeschwindigkeit angetrieben wird, die zumindest das Zweifache der ersten Umfangsgeschwindigkeit beträgt,
**dadurch gekennzeichnet, dass**
der Faden an den zum Abziehen angetriebenen Führungsmantel mit einer ununterbrochenen Kontaktlänge von zumindest 650 mm geführt wird, wobei der Führungsmantel auf eine Oberflächentemperatur im Bereich zwischen 80 °C bis 200 °C erwärmt wird.

2. Verfahren nach Anspruch 1,
**dadurch gekennzeichnet, dass**
der Faden den Führungsmantel mit einem Umschlingungswinkel von größer 270° umschlingt.

3. Verfahren nach Anspruch 1 oder 2,
**dadurch gekennzeichnet, dass**
der Faden an den zum Verstrecken angetriebenen Führungsmantel mit einer ununterbrochenen Kontaktlänge von zumindest 650 mm geführt wird, wobei der Führungsmantel auf eine Oberflächentemperatur im Bereich zwischen 80 °C bis 200 °C erwärmt wird.

4. Verfahren nach einem der Ansprüche 1 bis 3,
**dadurch gekennzeichnet, dass**
der Faden die beiden Führungsmäntel mit je einem Umschlingungswinkel von größer 270° umschlingt und in einer Fadenstrecke zwischen den beiden Führungsmänteln vollständig verstreckt wird.

5. Verfahren nach einem der Ansprüche 1 bis 4,
**dadurch gekennzeichnet, dass**
der Faden an den Führungsmänteln der Galetten zum Abziehen und Verstecken jeweils in einer umlaufenden Führungsnut geführt wird.

6. Verfahren nach einem der Ansprüche 1 bis 5,
**dadurch gekennzeichnet, dass**,
der Faden vor Auflauf auf den zum Abziehen angetriebenen Führungsmantel mit einer Teilumschlingung über zumindest eine Verteilrolle geführt wird.

7. Verfahren nach einem der Ansprüche 1 bis 6,
**dadurch gekennzeichnet, dass**
der Faden vor oder nach dem Verstrecken zusätzlich ohne Kontakt durch Wärmestrahlung beheizt wird.

8. Vorrichtung zur Durchführung des Verfahrens nach einem der Ansprüche 1 bis 7, mit zumindest zwei im Abstand zueinander angeordneter Galetten (2,3), die beheizte und angetriebene Führungsmäntel (2.1, 3.1)zum Abziehen und Verstrecken des Fadens (15) aufweisen,
**dadurch gekennzeichnet, dass**
der beheizte Führungsmantel (2.1) zum Abziehen des Fadens (15) einen Au-βendurchmesser in einer Größe aufweist, dass der Faden (15) bei einer Teilumschlingung mit einer ununterbrochenen Kontaktlänge von zumindest 650 mm am Umfang des Führungsmantels (2.1) führbar ist.

9. Vorrichtung nach Anspruch 8,
**dadurch gekennzeichnet, dass**
der beheizte Führungsmantel (3.1) zum Verstrecken des Fadens (15) einen Außendurchmesser in einer Größe aufweist, dass der Faden (15) bei einer Teilumschlingung an dem Führungsmantel (3.1) mit einer ununterbrochenen Kontaktlänge von zumindest 650 mm führbar ist.

10. Vorrichtung nach einem der Ansprüche 8 oder 9,
**dadurch gekennzeichnet, dass**
dem Führungsmantel (2.1) zum Abziehen auf einer Fadenablaufseite eine angetriebene Umlenkrolle (4.1) zugeordnet ist, durch welche der Faden (15) zwischen den Führungsmänteln (2.1, 3.1) der Galetten (2,3)geführt ist.

11. Vorrichtung nach einem der Ansprüche 8 bis 10,
**dadurch gekennzeichnet, dass**
dem Führungsmantel (3.1) zum Verstrecken auf einer Fadenablaufseite eine zweite angetriebene Umlenkrolle (4.2) zugeordnet ist.

12. Vorrichtung nach einem der Ansprüche 8 bis 11,
**dadurch gekennzeichnet, dass**
dem Führungsmantel (2.1) zum Abziehen auf einer Fadenzulaufseite zumindest eine Verteilrolle (33.1) zugeordnet ist.

13. Vorrichtung nach einem der Ansprüche 8 bis 12,
**dadurch gekennzeichnet, dass**
die Führungsmäntel (2.1, 3.1) jeweils am Umfang eine umlaufende Führungsnut (23)aufweisen.

14. Vorrichtung nach einem der Ansprüche 8 bis 13,
**dadurch gekennzeichnet, dass**
zumindest ein zusätzlicher Strahlungsheizer (24) zum Erwärmen des Fadens (15) vorgesehen ist.

15. Vorrichtung nach einem der Ansprüche 8 bis 14,
**dadurch gekennzeichnet, dass**
dem Führungsmantel (2.1) zum Abziehen des Fadens (15) im Fadenlauf eine Verwirbelungseinrichtung (21.2) vorgeordnet ist, durch welche die Filamente des Fadens (15) verwirbelbar sind.

## Claims

1. Method for drawing-off and stretching a multifilament thread during melt spinning, in which said thread is guided having at least one partial wraparound at driven guiding jackets of a plurality of godets, in which a plurality of said driven guiding jackets of said godets are heatable, in which one of said guiding jackets for drawing-off said thread is driven at a first circumference speed in the range above 1,500 m/min, and in which at least one downstream guiding jacket for stretching said thread is driven at a second circumference speed being at least twice the first circumference speed,
**characterized in that**
said thread is guided at said driven guiding jacket for drawing-off, having an uninterrupted contact length of at least 650 mm, said guiding jacket being heated to have a surface temperature in the range between 80 °C to 200 °C.

2. Method according to claim 1,
**characterized in that**
said thread wraps around said guiding jacket at a wraparound-angle being larger than 270°.

3. Method according to claim 1 or 2,
**characterized in that**
said thread is guided at said guiding jacket being driven for drawing, having an uninterrupted contact length of at least 650 mm, said guiding jacket being heated to have a surface temperature in the range between 80 °C to 200 °C.

4. Method according to one of the claims 1 to 3,
**characterized in that**
said thread wraps around both said guiding jackets, having at each a wraparound angle being larger than 270°, and is fully stretched in a thread course between both said guiding jackets.

5. Method according to one of the claims 1 to 4,
**characterized in that**
said thread is guided in a circumferential guiding groove in each one of said guiding jackets of said godets for drawing-off and stretching.

6. Method according to one of the claims 1 to 5,
**characterized in that**
said thread is guided having a partial wraparound over at least one distributor roller prior to running onto said guiding jacket driven for drawing-off.

7. Method according to one of the claims 1 to 6,
**characterized in that**
said thread is additionally heated without contact by heat radiation prior to or after stretching.

8. Device for performing said method according to one of the claims 1 to 7, comprising at least two godets (2,3) disposed at a distance to one another, having heated and driven guiding jackets (2.1, 3.1) for drawing-off and stretching said thread (15),
**characterized in that**
said heated guiding jacket (2.1) for drawing-off said thread (15) has an external diameter in a size, so that said thread (15) is guidable at
said circumference of said guiding jacket (2.1) having a partial wraparound with an uninterrupted contact length of at least 650 mm.

9. Device according to claim 8,
**characterized in that**
said heated guiding jacket (3.1) for stretching said thread (15) has an external diameter in a size, so that said thread (15) is guidable at said guiding jacket (3.1) having a partial wraparound with an uninterrupted contact length of at least 650 mm.

10. Device according to one of the claims 8 or 9,
**characterized in that**
said guiding jacket (2.1) for drawing-off is associated at a yarn delivery side with a driven deflection roller (4.1), through which said thread (15) is guided between said guiding jackets (2.1, 3.1) of said godets (2,3).

11. Device according to one of the claims 8 to 10,
**characterized in that**
said guiding jacket (3.1) for stretching is associated at a yarn delivery side with a second driven deflection roller (4.2).

12. Device according to one of the claims 8 to 11,
**characterized in that**
said guiding jacket (2.1) for drawing-off is associated at a yarn feed side with at least one distributor roller (33.1).

13. Device according to one of the claims 8 to 12,
**characterized in that**
said guiding jackets (2.1, 3.1) each comprise a circumferential guiding groove (23) at said circumference.

14. Device according to one of the claims 8 to 13,
**characterized in that**
at least one additional radiant heater (24) is provided for heating said thread (15).

15. Device according to one of the claims 8 to 14,
**characterized in that**
said guiding jacket (2.1) for drawing-off said thread (15) has an upstream mingling device (21.2) in the thread course, through which said filaments of said thread (15) are mingleable.

## Revendications

1. Procédé pour retirer et étirer un fil multifilaire lors du filage à l'état fondu, dans lequel le fil est guidé avec au moins un enlacement partiel sur des enveloppes de guidage entraînées de plusieurs galettes, dans lequel une pluralité des enveloppes de guidage des galettes est chauffée, dans lequel pour retirer le fil une des enveloppes de guidage est entraînée à une première vitesse circonférentielle de l'ordre d'au dessus de 1.500 m/min et dans le cas duquel au moins une enveloppe de guidage agencée en aval pour étirer le fil est entraînée à une deuxième vitesse circonférentielle plus élevée qui comporte au moins le double de la première vitesse circonférentielle, **caractérisé en ce que** le fil est guidé sur l'enveloppe de guidage entraînée pour être retirée, avec une longueur de contact ininterrompue d'au moins 650 mm, l'enveloppe de guidage étant chauffée à une température surfacique de l'ordre entre 80°C à 200°C.

2. Procédé selon la revendication 1, **caractérisé en ce que** le fil enlace l'enveloppe de guidage avec un angle d'enlacement plus grand que 270°C.

3. Procédé selon la revendication 1 ou 2, **caractérisé en ce que** le fil est guidé sur l'enveloppe de guidage entraînée pour être étirée avec l'enveloppe avec une longueur de contact ininterrompue d'au moins 650 mm, l'enveloppe de guidage étant chauffée à une température surfacique de l'ordre d'entre 80°C à 200°C.

4. Procédé selon l'une des revendications 1 à 3, **caractérisé en ce que** le fil enlace les deux enveloppes de guidage avec respectivement un angle d'enlacement plus grand que 270°et est complètement étiré dans un trajet de fil entre les deux enveloppes de guidage.

5. Procédé selon l'une des revendications 1 à 4 , **caractérisé en ce que** pour le retirage et l'étirage le fil est guidé sur les enveloppes de guidage des galettes respectivement dans une rainure de guidage circonférentielle.

6. Procédé selon l'une des revendications 1 à 5, **caractérisé en ce qu'**avant d'arriver sur l'enveloppe de guidage entraînée pour le retirage, le fil est guidé avec un enlacement partiel sur au moins un rouleau de répartition.

7. Procédé selon l'une des revendications 1 à 6, **caractérisé en ce qu'**avant ou après l'étirage le fil est chauffé de surcroit sans contact par rayonnement thermique.

8. Dispositif pour la mise en oeuvre du procédé selon l'une des revendications 1 à 7, avec au moins deux galettes (2, 3) agencées à distance l'une par rapport à l'autre et qui ont des enveloppes de guidage (2.1, 3.1) chauffées et entraînées pour retirer et pour étirer le fil (15), **caractérisé en ce que** pour retirer le fil (15) l'enveloppe de guidage (2.1) chauffée a un diamètre extérieur de la taille que au cas où il aurait un enlacement partiel, le fil (15) peut être guidé sur la circonférence de l'enveloppe de guidage (2.1) avec une longueur de contact ininterrompue d'au moins 650 mm.

9. Dispositif selon la revendication 8, **caractérisé en ce que** pour l'étirage du fil (15) l'enveloppe de guidage chauffée (3.1) a un diamètre extérieur d'une telle taille qu'en cas d'enlacement partiel le fil (15) peut être guidé sur l'enveloppe de guidage (3.1) avec une longueur de contact ininterrompue d'au moins 650 mm.

10. Dispositif selon l'une des revendications 8 ou 9, **caractérisé en ce que** pour le retirage une galette de déviation (4.1) entraînée est attribuée à l'enveloppe de guidage (2.1) sur un coté de sortie du fil, grâce à laquelle le fil (15) est guidé entre les enveloppes de guidage (2.1, 3.1) des galettes (2, 3).

11. Dispositif selon l'une des revendications 8 à 10, **caractérisé en ce que** pour l'étirage une deuxième galette de déviation entraînée (4.2) est attribuée à l'enveloppe de guidage (3.1).

12. Dispositif selon l'une des revendications 8 à 11, **caractérisé en ce que** pour l'étirage on associe à l'enveloppe de guidage (2.1) sur un coté d'entrée du fil au moins un rouleau de répartition (33.1).

13. Dispositif selon l'une des revendications 8 à 12, **caractérisé en ce que** les enveloppes de guidage (2.1, 3.1) ont respectivement sur leur circonférence une rainure de guidage (23) qui s'étend autour de la périphérie.

14. Dispositif selon l'une des revendications 8 à 13, **caractérisé en ce que** pour chauffer le fil (15) au moins un chauffage à rayonnement additionnel (24) est prévu.

15. Dispositif selon l'une des revendications 8 à 14, **caractérisé en ce que** pour étirer le fil (15) une installation de tourbillonnement (21.1) est agencée en amont de l'enveloppe de guidage (2.1) dans le trajet du fil, installation de tourbillonnement (21.1) par laquelle les filaments du fil (15) peuvent être tourbillonnés.
